# FASCICULE DE BREVET EUROPEEN

(11) **EP 1 750 966 B1**
(45) Date de publication et mention de la délivrance du brevet: **30.07.2008**
(21) Numéro de dépôt: 05766716.4
(22) Date de dépôt: 31.05.2005
(51) Int. Cl.: B60K 6/20

(54) **ELEMENT DE TRANSMISSION POUR UNE CHAINE DE TRACTION DE TYPE HYBRIDE PARALLELE**
ÜBERTRAGUNGSELEMENT FÜR EINEN PARALLELEN HYBRIDANTRIEBSSTRANG
TRANSMISSION ELEMENT FOR PARALLEL HYBRID TRACTION CHAIN

(30) Priorité: 03.06.2004 FR 0406028
(43) Date de publication de la demande: 14.02.2007
(73) Titulaire: PEUGEOT CITROËN AUTOMOBILES S.A., 78140 Vélizy Villacoublay (FR)
(72) Inventeur: CHAPELON, Lionel, F-60650 LE MONT SAINT ADRIEN (FR); PIERRE, David, F-92500 Rueil Malmaison (FR)
(86) Numéro de dépôt international: PCT/FR2005/050394
(87) Numéro de publication internationale: WO 2005/123434

(56) Documents cités:
- EP-A- 1 369 280
- EP-A2- 1 403 117
- DE-A1- 10 209 514
- FR-A1- 2 814 121
- US-B1- 6 332 257

## Description

La présente invention concerne un élément de transmission pour une chaîne de traction de type hybride parallèle, notamment pour véhicules automobiles.

On entend par chaîne de traction hybride parallèle, une chaîne de traction fournissant à un arbre de roues une énergie mécanique à partir d'au moins un moteur de type « irréversible » (en général un moteur thermique) et d'au moins un moteur de type « réversible » (en général un moteur électrique). Dans ce type de chaîne, le noeud d'énergie qui provient des deux moteurs est de nature mécanique.

On connaît de telles chaînes de traction (FR 2 814 121) qui comprennent un moteur thermique, un élément de transmission, et une boîte de vitesses, dont l'entrée est reliée à un élément de transmission et la sortie à un arbre de roues.

L'élément de transmission comporte en outre un moteur électrique ainsi qu'un premier embrayage de liaison entre le moteur thermique et le moteur électrique, et un deuxième embrayage de liaison entre le moteur électrique et la boîte de vitesses. Les premier et deuxième embrayages sont de type humide.

De telles chaînes de traction hybride ne donnent pas entière satisfaction.

En effet, l'élément de transmission qui intègre le moteur électrique et les deux embrayages de liaison respectivement au moteur thermique et à la boîte de vitesses n'est pas prévu pour être facilement interchangeable avec un embrayage simple du type utilisé dans les chaînes de traction classique à moteur thermique.

Plus précisément, l'intégration d'un tel élément de transmission dans une chaîne de traction classique nécessite le décalage du moteur thermique ou/et de la boîte de vitesses, ce qui entraîne la modification de nombreuses pièces du compartiment moteur.

Compte tenu du faible nombre de véhicules à propulsion hybride produit de nos jours, le coût de ces chaînes de traction est par conséquent extrêmement élevé par rapport au coût d'une chaîne de traction d'un groupe moto-propulseur à propulsion classique.

L'invention a donc pour but de proposer un élément de transmission de faible encombrement qui puisse se substituer à un embrayage simple d'une chaîne de traction mono-source classique pour former une chaîne de traction de type hybride parallèle, sans modification majeure des autres éléments de la chaîne de traction.

L'invention a donc pour objet un élément de transmission pour une chaîne de traction de type hybride parallèle, notamment pour véhicules automobiles, ledit élément comprenant un organe d'entrée rotatif destiné à être relié à un moteur thermique, un organe de sortie de mouvement destiné à être relié à un arbre d'entrée de boîte de vitesses, une machine électrique comprenant un stator et un rotor, un premier embrayage de liaison entre l'organe d'entrée et un organe intermédiaire rotatif autour d'un premier axe, l'organe intermédiaire étant relié en rotation au rotor, un second embrayage de liaison entre l'organe intermédiaire et l'organe de sortie, l'axe de rotation du rotor est distinct du premier axe et des moyens de transmission relient en rotation le rotor et l'organe intermédiaire **caractérisé en ce qu**'il comprend un carter comportant une première demi-coquille supportant à rotation l'organe d'entrée et une seconde demi-coquille, les première et seconde demi-coquilles définissant un logement dans lequel sont montés coaxialement et concentriquement les premier et second embrayages de liaison. La publication DE-A-102 09 514 decrit un elément de transmission d'apres le preambule de la revendication 1.

Suivant d'autres caractéristiques de l'invention, prises seules ou suivant toutes les combinaisons techniquement possibles :
- l'axe de rotation du rotor est parallèle audit premier axe;
- la machine électrique est de forme allongée suivant l'axe de rotation du rotor;
- la machine électrique est à l'extérieur dudit logement et le rotor est solidaire en rotation d'un organe de couplage dans ledit logement;
- les moyens de transmission comprennent une première roue dentée solidaire d'une surface radiale de l'organe de couplage, une seconde roue dentée solidaire d'une surface radiale de l'organe intermédiaire et une chaîne de transmission qui relie les première et seconde roues dentées ;
- l'organe intermédiaire est en forme de moyeu s'étendant perpendiculairement au premier axe, ce moyeu comportant sur une face amont, une couronne axiale externe en liaison rotative avec le premier embrayage, une couronne axiale interne en liaison rotative avec le second embrayage, ce moyeu étant monté rotatif autour du premier axe sur un distributeur fixé au carter ;
- l'organe d'entrée est formé par un disque s'étendant perpendiculairement au premier axe, ce disque comportant sur une face amont, une couronne axiale amont munie de cannelures de liaison avec un volant amortisseur relié au moteur thermique et sur une face aval, une couronne axiale aval en liaison rotative avec le premier embrayage ;
- l'organe de sortie est formé par un disque s'étendant perpendiculairement au premier axe, ce disque comportant sur une face aval, une couronne axiale interne munie de cannelures de liaison avec un arbre d'entrée de boîte de vitesses et une couronne axiale externe en liaison rotative avec le second embrayage ;
- l'organe d'entrée, les premier et second embrayages, l'organe intermédiaire et l'organe de sortie font partie d'un module agencé d'un seul tenant dans le logement ;
- les premier et second embrayages sont de type humide, le logement étant fermé de façon étanche à un fluide de lubrification et de refroidissement ;
- le premier embrayage comprend une première série de disques en liaison rotative avec l'organe d'entrée et une seconde série de disques en liaison rotative avec l'organe intermédiaire, les disques de cette seconde série étant disposés entre les disques de la première série, les première et seconde séries de disques étant déplaçables en translation axiale sous l'action d'un piston d'actionnement disposé dans un logement de l'organe intermédiaire ;
- le second embrayage comprend une première série de disques en liaison rotative avec l'organe intermédiaire et une seconde série de disques en liaison rotative avec l'organe de sortie, les disques de la seconde série étant disposés entre les disques de la première série, les première et seconde séries de disques étant déplaçables en translation axiale sous l'action d'un piston d'actionnement disposé dans un logement de l'organe intermédiaire ;
- les premier et second embrayages comprennent chacun un organe de rappel en position ouverte de ces embrayages ; et
- il comprend en outre un circuit hydraulique de commande sélective de la fermeture des premier et second embrayages.

L'invention a également pour objet un véhicule automobile comprenant une chaîne de traction de type hybride parallèle, ladite chaîne de traction comprenant un moteur thermique, une boîte de vitesses et un élément de transmission tel que précédemment mentionné.

L'invention sera mieux comprise à la lecture de la description qui va suivre, donnée à titre d'exemple et faite en référence aux dessins annexés dans lesquels :
- la Figure 1 est une vue schématique en coupe axiale d'un élément de transmission selon l'invention ;
- la Figure 2 est une vue d'un détail de la Figure 1 ; et
- la Figure 3 est une vue schématique des circuits hydrauliques de commande et de lubrification/refroidissement de l'élément de transmission selon l'invention.

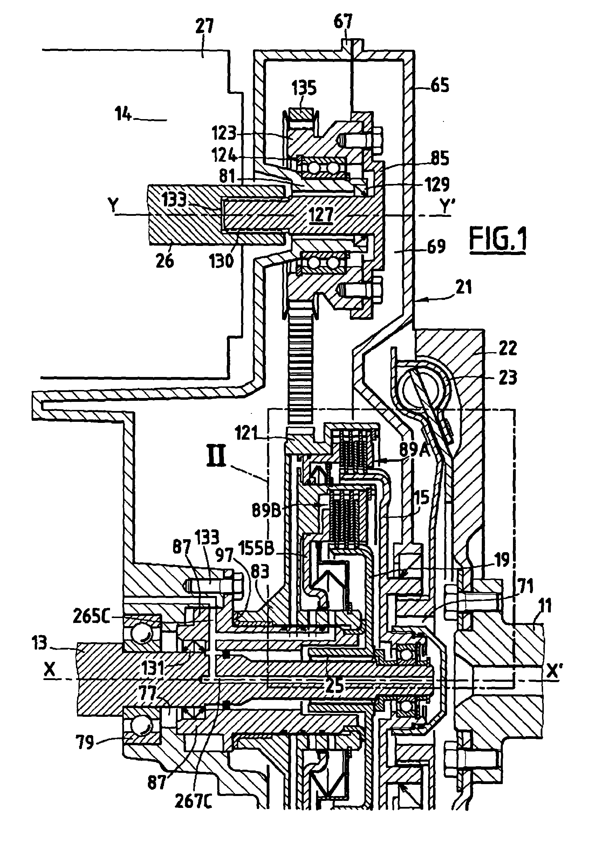

Sur la Figure 1, on a représenté un élément de transmission selon l'invention, destiné à relier un vilebrequin 11 de moteur thermique à un arbre d'entrée 13 de boîte de vitesses.

Cet élément de transmission comprend une machine électrique 14, un organe d'entrée 15 rotatif autour d'un premier axe X-X', un organe de sortie 19 de mouvement, rotatif autour du premier axe X-X', et un carter 21 d'embrayage.

L'axe X-X' est orienté de l'entrée vers la sortie pour la commodité de la description qui va suivre.

Les termes « amont », « aval », « axial » et « radial » s'entendront en référence à cette orientation.

Le vilebrequin 11 du moteur thermique est muni d'un volant d'inertie 22, et est relié à l'organe d'entrée 15 par un dispositif amortisseur 23.

L'arbre d'entrée 13 de la boîte de vitesses (désigné par « arbre primaire » ou dans ce texte par « arbre de boîte ») est monté rotatif autour de l'axe X-X'. II comprend sur sa face radiale extérieure une portion cannelée 25 qui coopère avec l'organe de sortie 19.

La machine électrique 14 comprend un rotor 26 et un stator 27. Le rotor 26 est disposé suivant un axe Y-Y' parallèle au premier axe X-X', à l'écart de ce premier axe X-X' et à l'extérieur du carter d'embrayage 21.

Cette machine électrique 14 est de forme allongée suivant l'axe Y-Y' de sorte que la longueur de la machine électrique 14, prise suivant la direction Y-Y' est supérieure à son diamètre, pris suivant une direction perpendiculaire à l'axe Y-Y'.

Cette disposition est particulièrement adaptée pour optimiser l'encombrement des groupes motopropulseurs à disposition transversale par rapport à une direction longitudinale du véhicule.

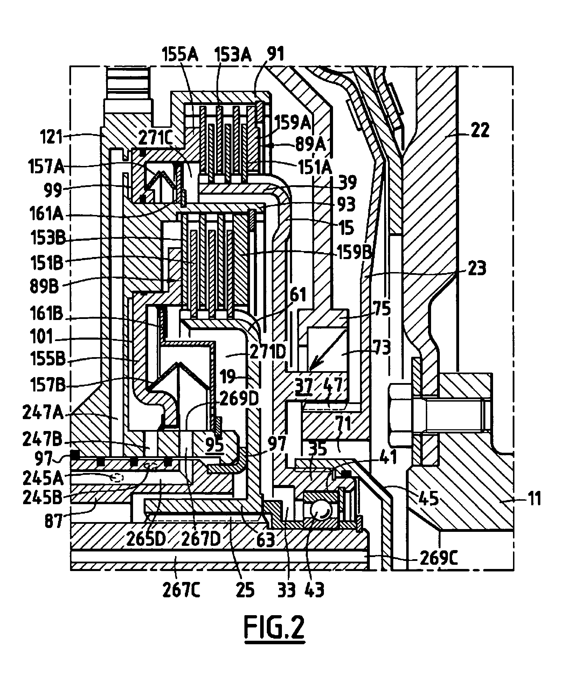

Comme illustré sur la Figure 2, l'organe d'entrée 15 est en forme de disque qui s'étend perpendiculairement à l'axe X-X'. II est traversé par un alésage 33 central d'axe X-X'. II comprend des première et seconde couronnes amont 35 et 37 sur la face amont et une couronne aval 39 sur la face aval, qui s'étendent suivant des directions parallèles à l'axe X-X'.

L'extrémité amont de l'arbre de boîte 13 est positionnée dans l'alésage central 33. La première couronne amont 35 délimite circonférentiellement cet alésage 33. La face radiale interne de cette première couronne amont est munie d'un logement circonférentiel 41.

L'organe d'entrée 15 est monté libre en rotation autour de l'axe X-X' sur l'arbre de boîte 13 au moyen d'un palier de roulement 43 dont la bague externe est en appui dans le logement circonférentiel 41 et la bague interne est en appui sur l'arbre de boîte 13.

Un capot d'étanchéité 45 est fixé en appui sur la face radiale externe de la première couronne circonférentielle 35 pour obturer l'alésage 33 en amont.

La seconde couronne amont 37 comprend une face radiale interne 47 cannelée qui coopère avec des cannelures sur une surface externe en regard du dispositif amortisseur 23 fixé au volant d'inertie 22 équipant le vilebrequin 11.

L'organe de sortie 19 est en forme de disque qui s'étend perpendiculairement à l'axe X-X'. II comprend sur sa face aval une couronne aval externe 61 et une couronne aval interne 63 qui s'étendent suivant des directions parallèles à l'axe X-X'.

Cette couronne aval interne 63 est munie sur sa face radiale interne de cannelures qui coopèrent avec la portion cannelée 25 de l'arbre de boîte 13, comme décrit ci-dessus.

En se référant à la Figure 1, le carter d'embrayage 21 est constitué essentiellement d'une première demi-coquille 65 et d'une deuxième demi-coquille 67, assemblées par des moyens de fixation (non représentés) répartis sur la périphérie du carter 21. Les deux demi-coquilles 65 et 67 de carter délimitent intérieurement un logement 69.

La première demi-coquille 65 est traversée par un alésage central 71 d'axe X-X'. En se référant à la Figure 2, les première et seconde couronnes amont 35 et 37 de l'organe d'entrée 15 ainsi que l'extrémité amont de l'arbre de boîte 13 sont disposés en saillie dans cet alésage 71.

Par ailleurs, un joint d'étanchéité 73 est monté en appui, d'une part, sur la face externe de la seconde couronne amont 37 de l'organe d'entrée 15 et d'autre part, dans un logement circonférentiel 75 de la première demi-coquille 65.

En référence à la Figure 1, la seconde demi-coquille 67 est traversée par un alésage 77 d'axe X-X' dans lequel l'arbre de boîte 13 est monté rotatif autour de l'axe X-X' par l'intermédiaire d'un palier de roulement 79.

La seconde demi-coquille est par ailleurs munie d'un fourreau 81 traversé par un alésage d'axe Y-Y'.

Le logement 69 défini par les deux demi-coquilles 65 et 67 contient un organe intermédiaire 83, un organe de couplage 85 au rotor 26 de la machine électrique 14, un distributeur hydraulique 87, un premier embrayage 89A entre l'organe d'entrée 15 et l'organe intermédiaire 83 et un second embrayage 89B entre l'organe intermédiaire 83 et l'organe de sortie 19.

L'organe intermédiaire 83 est formé essentiellement par un moyeu. Comme illustré sur la Figure 2, la face amont de cet organe 83 comprend successivement suivant une direction radiale depuis l'extérieur vers l'axe X-X', une couronne amont externe 91, une couronne amont interne 93 et une couronne d'appui 95 qui s'étendent parallèlement à la direction axiale vers l'amont.

La couronne d'appui 95 repose sur le distributeur hydraulique 87, au moyen de deux paliers lisses 97. Ainsi, l'organe intermédiaire 83 est monté rotatif autour de l'axe X-X' par rapport au distributeur hydraulique 87.

Cet organe 83 comprend en outre un premier logement de piston 99 qui s'étend radialement entre la couronne externe 91 et la couronne interne 93 et un second logement de piston 101 qui s'étend radialement entre la couronne interne 93 et la couronne d'appui 95.

L'organe intermédiaire 83 comprend en outre sur sa face radiale externe une roue tangente dentée 121 de liaison avec l'organe de couplage 85.

L'organe de couplage 85 (Figure 1) comprend une roue dentée 123 montée rotative autour de l'axe Y-Y' au moyen de paliers de roulement 124 en appui sur les faces radiales externes du fourreau 81.

L'organe de couplage 85 comprend en outre un arbre de sortie 127 monté solidaire de la roue dentée 123. Un joint d'étanchéité 129 est disposé entre cet arbre de sortie 127 et le fourreau 81. L'arbre de sortie 127 comprend en outre une portion amont 130 à l'extérieur du fourreau 81.

La surface radiale externe de la portion amont 130 de l'arbre de sortie 127 comprend une zone cannelée.

Cette zone cannelée coopère avec un logement cannelé 133 axial dans le rotor 26 de sorte que le rotor 26 et l'organe de couplage 85 sont solidaires en rotation.

Par ailleurs, les dents de la roue tangente dentée 123 de l'organe de couplage 85 et de la roue dentée 121 de l'organe intermédiaire 83 sont dans le même plan de rotation, perpendiculaire aux axes X-X' et Y-Y'.

Une chaîne 135 de type « morse » dont une première portion coopère avec la roue dentée 123 de l'organe de couplage 85 et une seconde portion coopère avec la roue tangente dentée 121 de l'organe intermédiaire 83 relie en rotation ces organes.

Le distributeur hydraulique 87 est constitué d'un manchon qui s'étend axialement suivant l'axe X-X'. La base aval de ce manchon est calée entre la seconde demi-coquille 67 du carter 21 et l'arbre de boîte 13. Un double joint d'étanchéité 131 est disposé entre ce manchon et l'arbre de boîte 13.

Ce manchon est par ailleurs fixé sur la seconde demi-coque 67 au moyen de vis 133.

Comme illustré sur la Figure 2, le premier embrayage 89A est constitué d'une première série de disques 151A liés en rotation à la couronne aval 39 de l'organe d'entrée 15 par des cannelures axiales et d'une deuxième série de disques 153A liés en rotation à la couronne amont externe 91 de l'organe intermédiaire 83 par des cannelures axiales. Il comprend en outre un premier piston 155A et un élément élastique 157A.

Les premiers et deuxièmes disques 151A et 153A sont imbriqués de façon alternée et sont déplaçables axialement respectivement sur la couronne aval 39 de l'organe d'entrée 15 et sur la couronne externe 91 de l'organe intermédiaire 83.

Une butée amont 159A, solidaire de la couronne externe 91 de l'organe intermédiaire 83 limite le déplacement axial des premiers et seconds disques 151A et 153A vers l'amont.

Le premier piston 155A possède une première surface d'appui sur la seconde série de disques 153A et une seconde surface d'appui, en regard du fond du premier logement 99. Le premier piston 155A obture le premier logement 99 de manière étanche.

L'élément élastique 157A prend appui d'une part, sur une surface du piston à l'opposé de la seconde surface et d'autre part, sur un support 161A solidaire de la couronne interne 93 de l'organe intermédiaire 83.

Au repos, l'élément élastique 157A, constitué par exemple par un ressort hélicoïdal, ou un diaphragme ou une rondelle élastique, maintient la seconde surface d'appui du premier piston 155A au contact du fond du logement 99. Le premier embrayage 89A est donc naturellement en position ouverte, c'est à dire en position débrayée

Cet embrayage 89A est de type « humide ». Le premier piston 155A est déplaçable par coulissement axial vers l'amont lorsque le fluide de commande qui débouche dans le premier logement 99 exerce une pression hydraulique sur le piston 155A.

Ce déplacement permet de serrer de manière solidaire les premiers et seconds disques 151A et 153A entre la première surface du premier piston 155A et la butée 159A pour que le premier embrayage 89A soit en position fermée, c'est à dire en position embrayée.

Le second embrayage 89B est de constitution et de fonctionnement identique au premier embrayage 89A.

II comprend des première et seconde séries de disques 151 B et 153B solidaires en rotation respectivement de la couronne aval 61 de l'organe de sortie 19 et de la couronne interne 93 de l'organe intermédiaire 83, par des cannelures.

II comprend aussi une butée 159B, un second piston 155B possédant une première surface de contact avec les seconds disques 153B et une seconde surface de contact en regard du fond du second logement 101, et un élément élastique 157B.

Le second piston 155B obture le second logement 101 de manière étanche.

L'élément élastique 157B prend appui d'une part, sur une surface du second piston 155B à l'opposé de sa seconde surface et d'autre part, sur un support 161 B solidaire de la couronne d'appui 95 de l'organe intermédiaire 83.

Comme pour le premier embrayage 89A, l'élément élastique 157B maintient, au repos, la seconde surface du piston 155B au contact du fond du logement 101 et par suite, les premiers et seconds disques 151B et 153B à l'écart. Le second embrayage 89B est donc naturellement en position ouverte, c'est à dire qu'il est naturellement en position débrayée.

Par ailleurs, le second embrayage 89B est de type « humide ». Le second piston 155B est déplaçable axialement vers l'amont sous l'effet de la pression du fluide qui débouche dans le second logement 101, pour que le second embrayage 89B soit en position fermée, c'est à dire embrayée.

Les premier et second embrayages 89A et 89B sont montés coaxialement et concentriquement, de sorte que l'encombrement de l'ensemble de transmission suivant l'axe X-X' est minimal. Cet encombrement est inférieur ou sensiblement égal à celui d'un élément d'embrayage classique de véhicule à propulsion mono-source.

De plus, l'organe de couplage 85 et l'organe intermédiaire 83 sont disposés dans un même plan perpendiculaire à l'axe X-X' pour minimiser l'encombrement de l'élément de transmission suivant l'axe X-X'.

Par ailleurs, le premier embrayage 89A est disposé radialement à l'extérieur du second embrayage 89B.

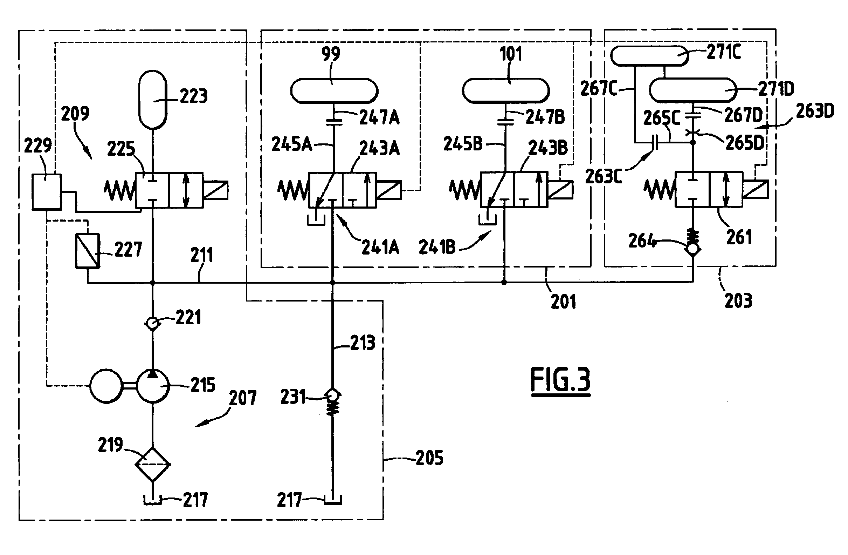

Comme illustré sur la Figure 3, les premier et second embrayages sont commandés sélectivement, lubrifiés et refroidis par un fluide sous pression circulant à travers un premier circuit hydraulique 201 de commande et un second circuit hydraulique 203 de lubrification/refroidissement depuis une source 205 de fluide sous pression commune à ces deux circuits 201 et 203.

Cette source 205 de fluide sous pression comprend un générateur de pression 207, un accumulateur de pression 209, une conduite 211 d'émission de fluide sous pression et un circuit de décharge 213.

Le générateur de pression 207 est constitué par une pompe 215 dont l'entrée est reliée hydrauliquement à un réservoir de fluide 217. Un élément de filtration 219 (désigné par « crépine ») est interposé entre le réservoir 217 et la pompe 215.

La sortie de la pompe 215 est reliée d'une part, à l'accumulateur de pression 209 et d'autre part, à la conduite d'émission 211. Cette sortie est munie d'un clapet anti-retour 221 qui évite que le fluide sous pression soit réintroduit dans la pompe 215. Dans l'exemple représenté sur la Figure 3, la pression du fluide en sortie de la pompe 215 est sensiblement de 40 bars, pour un débit de 1,4 litre par minute. Dans cet exemple, les embrayages sont dimensionnés pour transmettre un couple maximal de 270 N.m.

L'accumulateur de pression 209 comprend un réservoir de fluide 223 et une électrovanne de liaison 225 avec le générateur de pression 207 et la conduite d'émission 211. Cette électrovanne 225 fonctionne selon trois modes.

Dans un mode récepteur, le fluide sous pression circule depuis le générateur de pression 207 vers le réservoir 223 pour recharger le réservoir 223 en fluide sous pression. Dans un mode émetteur, le fluide sous pression circule entre le réservoir 223 et la conduite d'émission 211 pour distribuer du fluide sous pression aux circuits hydrauliques 201 et 203. Enfin, dans un mode neutre, le réservoir 223 est isolé de la conduite d'émission 211.

La conduite d'émission 211 est munie d'un capteur de pression 227. Ce capteur 227 est relié électriquement à une unité de commande 229 de l'électrovanne 225 de l'accumulateur de pression 209. Lorsque la pression mesurée par le capteur 227 diminue en dessous d'une valeur prédéterminée, l'unité de commande 229 active l'électrovanne 225 pour alimenter la conduite d'émission 211 en fluide sous pression à partir de l'accumulateur 209.

Par ailleurs, l'unité de commande 229 est reliée électriquement au moteur de la pompe 215 pour actionner cette pompe 215 en fonction de la pression mesurée par le capteur 227. Ainsi, lorsque la pression dans la conduite 211 descend en dessous d'une valeur seuil, la pompe 215 est actionnée et l'électrovanne 225 est ouverte pour recharger l'accumulateur de pression 209 en fluide sous pression.

Par ailleurs, la conduite d'émission 211 est reliée hydrauliquement au circuit de décharge 213. Ce circuit de décharge 213 comprend une soupape de sécurité 231 dont l'entrée est reliée à la conduite d'émission 211 et la sortie est reliée au réservoir 217. Au delà d'une valeur de tare prédéterminée (43 bars dans l'exemple illustré sur les Figures), cette soupape 231 est ouverte et le fluide sous pression circule depuis la conduite d'émission 211 jusqu'au réservoir 217 pour diminuer la pression dans cette conduite 211 et dans les premier et second circuits hydrauliques 201 et 203.

Le premier circuit hydraulique 201 de commande est relié hydrauliquement à la conduite d'émission 211. II comprend des premier et second circuits d'alimentation 241A et 241 B en fluide sous pression respectivement du premier et second logement 99 et 101 de l'organe intermédiaire 83.

Le premier circuit d'alimentation 241A comprend une électrovanne de commande 243A reliée hydrauliquement à la conduite d'émission 211, un premier canal 245A ménagé suivant une direction radiale dans le distributeur hydraulique 87 et un deuxième canal 247A ménagé suivant une direction radiale dans l'organe intermédiaire 83.

Le premier canal 245A comporte un orifice d'entrée relié à la sortie de l'électrovanne de commande 243A et un orifice de sortie qui s'ouvre dans l'espace annulaire entre le distributeur hydraulique 87 et l'organe intermédiaire 83 (Figure 2).

Le second canal 247A comprend un orifice d'entrée sur la face radiale interne de la couronne d'appui 95 en regard de l'orifice de sortie du premier canal 245A, et un orifice de sortie qui s'ouvre dans le premier logement de piston 99.

L'électrovanne 243A est pilotée par l'unité de commande 229 pour commander la pression dans le logement de piston 99 sur un continuum de valeurs dans une gamme prédéterminée (par exemple de 0 à 11 bars).

II est ainsi possible de piloter le premier embrayage 89A pour obtenir un serrage progressif des disques 151A et 153A.

En se référant à la Figure 3, le second circuit d'alimentation 241 B comprend une électrovanne de commande 243B reliée hydrauliquement à la conduite d'émission 211, un troisième canal 245B ménagé suivant une direction radiale dans le distributeur hydraulique 87 et un quatrième canal 247B ménagé suivant une direction radiale dans l'organe intermédiaire 83.

Le troisième canal 245B comporte un orifice d'entrée relié à la sortie de l'électrovanne de commande 243B et un orifice de sortie qui s'ouvre dans l'espace annulaire entre le distributeur hydraulique 87 et l'organe intermédiaire 83 (Figure 2). Le troisième canal 245B est décalé radialement par rapport au premier canal 245A.

Le quatrième canal 247B comprend un orifice d'entrée sur la face radiale interne de la couronne d'appui 95 en regard de l'orifice de sortie du troisième canal et un orifice de sortie qui débouche dans le second logement de piston 101.

L'électrovanne 243B est pilotée par l'unité de commande 229 pour commander la pression dans le logement de piston 99 sur un continuum de valeurs dans une gamme prédéterminée (par exemple de 0 à 11 bars).

Il est ainsi possible de piloter le second embrayage 89B pour obtenir un serrage progressif des disques 151 B et 153B.

En se référant à la Figure 3, le circuit de lubrification/refroidissement 203 comprend une électrovanne de commande 261 reliée hydrauliquement à la conduite d'émission 211. Cette électrovanne 261 est du type « tout ou rien », c'est-à-dire qu'elle possède deux modes de fonctionnement, ouvert ou fermé. Ce circuit 203 comprend par ailleurs une première conduite 263C et une seconde conduite 263D.

Une soupape de sécurité 264 est interposée entre la conduite d'émission 211 et l'électrovanne 261. Cette soupape 264 permet d'éviter, au moment de l'ouverture de l'électrovanne 261, la chute de pression dans la conduite d'émission 211 et donc l'ouverture inopinée de l'un ou l'autre ou des deux embrayages 89A, 89B initialement fermés par la mise en pression des logements 99, 101 à partir de la conduite d'émission 211.

La première conduite 263C comprend un cinquième canal radial 265C. Ce cinquième canal 265C est ménagé dans le distributeur 87. II relie hydrauliquement la sortie de l'électrovanne 261 à un orifice de sortie radial qui s'ouvre dans l'espace annulaire entre le distributeur hydraulique 87 et l'arbre de boîte 13 (Figure 1).

La première conduite comporte par ailleurs un sixième canal 267C interne d'axe X-X'. Ce sixième canal 267C est ménagé dans l'arbre de boite 13. II comprend un orifice d'alimentation radial sur sa face radiale extérieure, en regard de l'orifice de sortie radial du cinquième canal 265C et un orifice 269C axial sur la face axiale amont de cet arbre 13 (Figure 2).

Par ailleurs, en référence à la Figure 3, la seconde conduite 263D comprend un septième canal 265D axial. Ce canal 265D est ménagé dans le distributeur hydraulique 87 suivant une direction parallèle à l'axe X-X'. Il relie hydrauliquement le cinquième canal 265C à un orifice de sortie radial dans l'espace annulaire entre le distributeur hydraulique 87 et l'organe intermédiaire 83 (Figure 2).

Cette seconde conduite 263D comporte par ailleurs un huitième canal 267D radial interne. Ce canal 267D est ménagé dans l'organe intermédiaire 83. II comprend un orifice d'alimentation radial sur la face radiale interne de la couronne d'appui 95 en regard de l'orifice de sortie radial du septième canal axial 265D du distributeur 87. II comprend par ailleurs un orifice de sortie sur la face radiale externe de la couronne d'appui 95. Cet orifice de sortie 269D est décalé axialement vers l'amont par rapport au second logement de piston 101.

Lorsqu'un cycle de refroidissement et de lubrification des embrayages 89A, 89B doit être effectué, l'unité de commande 229 pilote la pompe 215 et ouvre l'électrovanne 261.

La lubrification et le refroidissement du premier embrayage 89A sont assurés par la circulation du fluide depuis la conduite d'émission 211, à travers successivement la soupape 264 si la pression dans ladite conduite d'émission 211 est supérieure à une valeur de tare prédéterminée de la soupape 264 (38 bars dans l'exemple illustré sur les Figures), l'électrovanne 261 mise en position ouverte, le cinquième canal 265C, le sixième canal 267C, l'orifice axial 269C de l'arbre de boîte 13, puis le roulement 43, jusqu'au premier espace 271C formé entre l'organe d'entrée 15, et l'organe de sortie 19, l'organe intermédiaire 83 et le premier piston 155A et enfin à travers les disques 151A et 153A du premier embrayage 89A.

La lubrification et le refroidissement du second embrayage 89B sont assurés par la circulation du fluide depuis la conduite d'émission 211, à travers successivement la soupape 264 si la pression dans la conduite 211 est supérieure à une valeur de tare prédéterminée de la soupape 264 (38 bars dans l'exemple illustré sur les Figures), l'électrovanne 261 mise en position ouverte, le septième canal 265D, le huitième canal 267D, l'orifice de sortie 269D jusqu' au second espace 271 D délimité par la couronne d'appui 95 de l'organe intermédiaire 83, le second piston 155B et l'organe de sortie 19, et enfin à travers les disques 151B et 153B du second embrayage 89B.

Par ailleurs, l'espace 271 D est en communication hydraulique avec l'espace 271C par le second embrayage 89B.

D'autre part, les deux demi-coquilles du carter 65 et 67, le capot d'étanchéité 45, l'organe d'entrée 15, l'organe de couplage 85 et l'arbre de boîte 13 définissent un logement 69 étanche pour le fluide de refroidissement et de lubrification.

La lubrification et le refroidissement des moyens de transmission constitués par la roue dentée 123 de l'organe de couplage 85, la chaîne morse 135 et la roue dentée 121 de l'organe intermédiaire 83, sont assurés par aspersion du fluide de lubrification et de refroidissement qui s'écoule hors du premier espace 271C à travers les premiers et seconds disques 151A et 153A du premier embrayage 89A.

Pour exemple, on décrira maintenant le fonctionnement de l'élément de transmission selon l'invention lors du décollage d'un véhicule automobile selon l'invention.

Dans un premier temps, le véhicule peut être décollé à l'aide de la machine électrique 14.

L'électrovanne 243B est actionnée pour alimenter en fluide sous pression le second circuit d'alimentation 241B. En se référant à la Figure 2, la pression du fluide dans le troisième canal 245B du distributeur hydraulique 87 puis dans le quatrième canal 247B de l'organe intermédiaire 83 et par suite dans le second logement 101 du second piston 155B augmente.

Sous l'effet de cette augmentation de pression, une force s'applique sur la seconde surface du second piston 155B. Cette force est supérieure à la force de rappel de l'élément élastique 157B et le second piston 155B se déplace axialement vers l'amont. Les premiers et les seconds disques 151 B et 153B du second embrayage 89B sont solidarisés progressivement suivant la pression dans le logement 101 commandée par l'unité de commande 229. Ainsi le second embrayage 89B est progressivement fermé ou embrayé.

Une alimentation électrique est fournie au stator 27 qui entraîne en rotation le rotor 26 et par suite, l'organe de couplage 85. Ce mouvement de rotation est transmis à l'organe intermédiaire 83 par la chaîne morse 135.

Le second embrayage 89B étant fermé, le mouvement de rotation de l'organe intermédiaire 83 est transmis à l'organe de sortie 19. Cet organe de sortie 19 entraîne en rotation autour de l'axe X-X' l'arbre de boîte 13 et par suite, si un rapport de la boîte de vitesses est engagé, les roues du véhicule.

Lorsque le véhicule atteint une vitesse prédéterminée, le moteur thermique peut être démarré à l'aide de la machine électrique.

L'électrovanne 243A est alors actionnée pour alimenter en fluide sous pression le premier circuit d'alimentation 241A. En se référant à la Figure 2, la pression du fluide dans le premier canal 245A du distributeur hydraulique 87, puis dans le deuxième canal 247A de l'organe intermédiaire 83 et par suite dans le premier logement 99 du premier piston 155A augmente.

Sous l'effet de cette augmentation de pression, une force s'applique sur la seconde surface du premier piston 155A. Cette force est supérieure à la force de rappel de l'élément élastique 157A. Le premier piston 155A se déplace alors axialement vers l'amont.

Par suite, les premiers et seconds disques 151A et 153A sont serrés progressivement suivant la pression dans le logement 99 commandée par l'unité de commande externe 229 entre la première surface du premier piston 155A et la butée 159A. Ainsi, le premier embrayage 89A est progressivement fermé ou embrayé.

La machine électrique 14 étant toujours alimentée, le mouvement de rotation de l'organe intermédiaire 83 est transmis à l'organe d'entrée 15 par le premier embrayage 89A.

L'organe d'entrée 15 entraîne en rotation le dispositif amortisseur 23, le volant d'inertie 22 et par suite le vilebrequin 11 du moteur thermique.

Lorsque ce moteur atteint un régime suffisant, l'injection et la combustion de carburant dans les pistons sont démarrées.

A cet instant, l'alimentation électrique de la machine électrique 14 peut être coupée. Le mouvement de rotation de l'organe intermédiaire 83 est transmis à l'organe de couplage 85 par la chaîne morse 135. Cette rotation de l'organe de couplage entraîne en rotation le rotor 26 pour une production possible d'énergie électrique qui est recueillie aux bornes du stator 27.

Durant toutes ces opérations, la lubrification et le refroidissement des premier et second embrayages 89A et 89B ainsi que de l'organe intermédiaire 83, de la chaîne morse 135, et de l'organe de couplage 85 est assurée par la circulation d'un fluide de lubrification et de refroidissement à travers l'électrovanne 261, et les première et deuxième conduites 263C et 263D comme décrit ci-dessus.

Par ailleurs, l'organe d'entrée 15, les premier et second embrayages 89A et 89B, l'organe intermédiaire 83, le distributeur hydraulique 87 et l'organe de sortie 19 font partie d'un module agencé d'un seul tenant dans le logement 69 du carter d'embrayage 21. Ce carter 21 peut être facilement adapté sur une chaîne de transmission de véhicule à propulsion mono-source.

En variante, les embrayages 89A et 89B peuvent être tous les deux naturellement fermés, c'est-à-dire naturellement embrayés ou l'un naturellement fermé et l'autre naturellement ouvert.

Grâce à l'invention qui vient d'être décrite, il est possible de disposer d'un élément de transmission particulièrement compact. Cet élément permet d'installer une chaîne de traction du type hybride parallèle sur un véhicule à configuration de transmission classique et inversement, sans modification majeure des autres éléments de la chaîne de traction, notamment du moteur thermique et de la boîte de vitesse qui restent au même emplacement.

Cet élément de transmission est disponible sous forme d'un module indépendant, agencé d'un seul tenant, ce qui facilite son montage.

## Revendications

1. Elément de transmission pour une chaîne de traction de type hybride parallèle, notamment pour véhicules automobiles, ledit élément comprenant un organe d'entrée (15) rotatif destiné à être relié à un moteur thermique (11), un organe de sortie (19) de mouvement destiné à être relié à un arbre d'entrée (13) de boîte de vitesses, une machine électrique (14) comprenant un stator (27) et un rotor (26), un premier embrayage (89A) de liaison entre l'organe d'entrée (15) et un organe intermédiaire (83) rotatif autour d'un premier axe (X-X'), l'organe intermédiaire (83) étant relié en rotation au rotor (26), un second embrayage (89B) de liaison entre l'organe intermédiaire (83) et l'organe de sortie (19), dans lequel l'axe (Y-Y') de rotation du rotor (26) est distinct du premier axe (X-X') et des moyens de transmission (121, 123, 135) relient en rotation le rotor (26) et l'organe intermédiaire (83) **caractérisé en ce qu'**il comprend un carter (21) comportant une première demi-coquille (65) supportant à rotation l'organe d'entrée (15) et une seconde demi-coquille (67) supportant à rotation l'arbre de boîte (13), les première et seconde demi-coquilles (65, 67) définissant un logement (69) dans lequel sont montés coaxialement et concentriquement les premier et second embrayages de liaison (89A, 89B).

2. Elément de transmission selon la revendication 1 **caractérisé en ce que** l'axe (Y-Y') de rotation du rotor (26) est parallèle audit premier axe (X-X').

3. Elément de transmission selon la revendication 2, **caractérisé en ce que** la machine électrique (14) est de forme allongée suivant l'axe de rotation du rotor (Y-Y').

4. Elément de transmission selon l'une des revendications 1 à 3, **caractérisé en ce que** la machine électrique (14) est à l'extérieur dudit logement (69) et **en ce que** le rotor (26) est solidaire en rotation d'un organe de couplage (85) dans ledit logement (69).

5. Elément de transmission selon la revendication 3 **caractérisé en ce que** les moyens de transmission (121, 123, 135) comprennent une première roue dentée (123) solidaire d'une surface radiale de l'organe de couplage (85), une seconde roue (121) dentée solidaire d'une surface radiale de l'organe intermédiaire (83) et une chaîne de transmission (135) qui relie les première et seconde roues (121, 123) dentées.

6. Elément de transmission selon l'une des revendications 1 à 5 **caractérisé en ce que** l'organe intermédiaire (83) est en forme de moyeu s'étendant perpendiculairement au premier axe (X-X'), ce moyeu comportant sur une face amont, une couronne axiale externe (91) en liaison rotative avec le premier embrayage (89A), une couronne axiale interne (93) en liaison rotative avec le second embrayage (89B), ce moyeu étant monté rotatif autour du premier axe (X-X') sur un distributeur (87) fixé au carter (21).

7. Elément de transmission selon l'une des revendications 1 à 6 **caractérisé en ce que** l'organe d'entrée (15) est formé par un disque s'étendant perpendiculairement au premier axe (X-X'), ce disque comportant sur une face amont, une couronne axiale amont (37) munie de cannelures (47) de liaison avec un volant amortisseur (22, 23) relié au moteur thermique (11) et sur une face aval, une couronne axiale aval (39) en liaison rotative avec le premier embrayage (89A).

8. Elément de transmission selon l'une des revendications 1 à 7 **caractérisé en ce que** l'organe de sortie (19) est formé par un disque s'étendant perpendiculairement au premier axe (X-X'), ce disque comportant sur une face aval, une couronne axiale interne (63) munie de cannelures (25) de liaison avec un arbre d'entrée (13) de boîte de vitesses et une couronne axiale externe (61) en liaison rotative avec le second embrayage (89B).

9. Elément de transmission selon l'une quelconque des revendications 1 à 8, **caractérisé en ce que** l'organe d'entrée (15), les premier et second embrayages (89A, 89B), l'organe intermédiaire (83) et l'organe de sortie (19) font partie d'un module agencé d'un seul tenant dans le logement (69).

10. Elément de transmission suivant l'une quelconque des revendications 1 à 9, **caractérisé en ce que** les premier et second embrayages (89A, 89B) sont de type humide, le logement (69) étant fermé de façon étanche à un fluide de lubrification et de refroidissement.

11. Elément de transmission selon la revendication 10, **caractérisé en ce que** le premier embrayage (89A) comprend une première série de disques (151A) en liaison rotative avec l'organe d'entrée (15) et une seconde série de disques (153A) en liaison rotative avec l'organe intermédiaire (83), les disques (153A) de cette seconde série étant disposés entre les disques (151A) de la première série, les première et seconde séries de disques (151A, 153A) étant déplaçables en translation axiale sous l'action d'un piston d'actionnement (155A) disposé dans un logement (99) de l'organe intermédiaire (83).

12. Elément de transmission selon l'une des revendications 10 ou 11, **caractérisé en ce que** le second embrayage (89B) comprend une première série de disques (153B) en liaison rotative avec l'organe intermédiaire (83) et une seconde série de disques (151 B) en liaison rotative avec l'organe de sortie (19), les disques (151B) de la seconde série étant disposés entre les disques (153B) de la première série, les première et seconde séries de disques (151B, 153B) étant déplaçables en translation axiale sous l'action d'un piston d'actionnement (155B) disposé dans un logement (101) de l'organe intermédiaire (83).

13. Elément de transmission selon l'une des revendications 10 à 12, **caractérisé en ce que** les premier et second embrayages (89A, 89B) comprennent chacun un organe de rappel (157A, 157B) en position ouverte de ces embrayages (89A, 89B).

14. Elément de transmission selon l'une des revendications 10 à 13, **caractérisé en ce qu'**il comprend en outre un circuit hydraulique (201, 203, 205) de commande sélective de la fermeture des premier et second embrayages (89A, 89B).

15. Véhicule automobile comprenant une chaîne de traction de type hybride parallèle, ladite chaîne de traction comprenant un moteur thermique, une boîte de vitesses et un élément de transmission selon l'une quelconque des revendications 1 à 14 reliant le moteur thermique à la boîte de vitesses.

## Claims

1. Transmission element for a drivetrain of parallel hybrid type, particularly for motor vehicles, the said element comprising a rotary input member (15) intended to be connected to a combustion engine (11), a movement output member (19) intended to be connected to a gearbox input shaft (13), an electric machine (14) comprising a stator (27) and a rotor (26), a first clutch (89A) providing the connection between the input member (15) and an intermediate member (83) able to rotate about a first axis (X-X'), the intermediate member (83) being rotationally connected to the rotor (26), a second clutch (89B) providing the connection between the intermediate member (83) and the output member (19), in which the axis (Y-Y') of rotation of the rotor (26) is separate from the first axis (X-X') and transmission means (121, 123, 135) rotationally connect the rotor (26) and the intermediate member (83), **characterized in that** it comprises a casing (21) comprising a first half-shell (65) rotationally supporting the input member (15) and a second half-shell (67) rotationally supporting the box shaft (13), the first and second half-shells (65, 67) defining a housing (69) in which the first and second connecting clutches (89A, 89B) are coaxially and concentrically mounted.

2. Transmission element according to Claim 1, **characterized in that** the axis (Y-Y') of rotation of the rotary (26) is parallel to the said first axis (X-X').

3. Transmission element according to Claim 2, **characterized in that** the electric machine (14) is of elongate shape along the axis of rotation of the rotor (Y-Y').

4. Transmission element according to one of Claims 1 to 3, **characterized in that** the electric machine (14) is on the outside of the said housing (69) and **in that** the rotor (26) rotates as one with a coupling member (85) in the said housing (69).

5. Transmission element according to Claim 3, **characterized in that** the transmission means (121, 123, 135) comprise a first sprocket (123) secured to a radial surface of the coupling member (85), a second sprocket (121) secured to a radial surface of the intermediate member (83), and a transmission chain (135) connecting the first and second sprockets.

6. Transmission element according to one of Claims 1 to 5, **characterized in that** the intermediate member (83) is in the form of a hub running at right angles to the first axis (X-X'), this hub comprising on an upstream face, an external axial annulus (91) in rotary connection with the first clutch (89A), an internal axial annulus (93) in rotary connection with the second clutch (89B), this hub being mounted to rotate about the first axis (X-X') on a directional control valve (87) fixed to the casing (21).

7. Transmission element according to one of Claims 1 to 6, **characterized in that** the input member (15) is formed of a disc running at right angles to the first axis (X-X'), this disc comprising, on an upstream face, an upstream axial annulus (37) equipped with splines (47) for connection with a damper flywheel (22, 23) connected to the combustion engine (11) and, on a downstream face, a downstream axial annulus (39) in rotary connection with the first clutch (89A).

8. Transmission element according to one of Claims 1 to 7, **characterized in that** the output member (19) is formed of a disc running at right angles to the first axis (X-X'), this disc comprising, on the downstream face, an internal axial annulus (63) equipped with splines (25) for connection with a gearbox input shaft (13) and an outer axial annulus (61) in rotary connection with the second clutch (89B).

9. Transmission element according to one of Claims 1 to 8, **characterized in that** the input member (15), the first and second clutches (89A, 89B), the intermediate member (83) and the output member (19) form part of a module arranged as a single piece in the housing (69).

10. Transmission element according to any one of Claims 1 to 9, **characterized in that** the first and second clutches (89A, 89B) are of the wet type, the housing (69) being sealed against a lubricating and cooling fluid.

11. Transmission element according to Claim 10, **characterized in that** the first clutch (89A) comprises a first series of discs, (151A) in rotary connection with the input member (15) and a second series of discs (153A) in rotary connection with the intermediate member (83), the discs (153A) of this second series being arranged between the discs (151A) of the first series, the first and second series of discs (151A, 153A) being movable in axial translation under the action of an actuating piston (155A) arranged in a housing (99) of the intermediate member (83).

12. Transmission element according to one of Claims 10 and 11, **characterized in that** the second clutch (89B) comprises a first series of discs (153A) in rotary connection with the intermediate member (83) and a second series of discs (151B) in rotary connection with the output member (19), the discs (151B) of the second series being arranged between the discs (153B) of the first series, the first and second series of discs (151B, 153B) being movable in axial translation under the action of an actuating piston (155B) arranged in a housing (101) of the intermediate member (83).

13. Transmission element according to one of Claims 10 to 12, **characterized in that** the first and second clutches (89A, 89B) each comprise a return member (157A, 157B) for returning these clutches (89A, 89B) to the disengaged position.

14. Transmission element according to one of Claims 10 to 13, **characterized in that** it further comprises a hydraulic control circuit (201, 203, 205) for selectively disengaging the first and second clutches (89A, 89B).

15. Motor vehicle comprising a drivetrain of parallel hybrid type, the said drivetrain comprising a combustion engine, a gearbox and a transmission element according to any one of Claims 1 to 14 connecting the combustion engine to the gearbox.

## Patentansprüche

1. Übertragungselement für einen parallelen Hybridantriebsstrang, insbesondere für Kraftfahrzeuge, wobei das Element ein sich drehendes Eingangsglied (15), das mit einer Wärmekraftmaschine (11) verbunden werden soll, ein sich bewegendes Ausgangsglied (19), das mit einer Eingangswelle (13) eines Getriebes verbunden werden soll, eine elektrische Maschine (14), die einen Stator (27) und einen Rotor (26) umfasst, eine erste Verbindungskupplung (89A) zwischen dem Eingangsglied (15) und einem sich um eine erste Achse (X-X') drehenden Zwischenglied (83), wobei das Zwischenglied (83) mit dem Rotor (26) drehverbunden ist, eine zweite Verbindungskupplung (89B) zwischen dem Zwischenglied (83) und dem Ausgangsglied (19) umfasst, in dem die Drehachse (Y-Y') des Rotors (26) sich von der ersten Achse (X-X') unterscheidet und Übertragungsmittel (121, 123, 135) den Rotor (26) und das Zwischenglied (83) drehverbinden, **dadurch gekennzeichnet, dass** es ein Gehäuse (21) umfasst, das eine erste Halbschale (65), die das Eingangsglied (15) bei Drehung stützt, und eine zweite Halbschale (67), die die Getriebewelle (13) bei Drehung stützt, enthält, wobei die erste und die zweite Halbschale (65, 67) eine Aufnahme (69) bilden, in der die erste und die zweite Verbindungskupplung (89A, 89B) koaxial und konzentrisch montiert sind.

2. Übertragungselement nach Anspruch 1, **dadurch gekennzeichnet, dass** die Drehachse (Y-Y') des Rotors (26) zu der ersten Achse (X-X') parallel ist.

3. Übertragungselement nach Anspruch 2, **dadurch gekennzeichnet, dass** die elektrische Maschine (14) eine verlängerte Form gemäß der Drehachse des Rotors (Y-Y') aufweist.

4. Übertragungselement nach einem der Ansprüche 1 bis 3, **dadurch gekennzeichnet, dass** die elektrische Maschine (14) sich außerhalb der Aufnahme (69) befindet und dass der Rotor (26) mit einem Kupplungsglied (85) in der Aufnahme (69) drehfest verbunden ist.

5. Übertragungselement nach Anspruch 3, **dadurch gekennzeichnet, dass** die Übertragungselemente (121, 123, 135) ein erstes Zahnrad (123), das mit einer Radialfläche des Kupplungsglieds (85) fest verbunden ist, ein zweites Zahnrad (121), das mit einer Radialfläche des Zwischenglieds (83) fest verbunden ist, und eine Übertragungskette (135), die das erste und das zweite Zahnrad (121, 123) verbindet, umfassen.

6. Übertragungselement nach einem der Ansprüche 1 bis 5, **dadurch gekennzeichnet, dass** das Zwischenglied (83) die Form einer Nabe aufweist, die sich senkrecht zu der ersten Achse (X-X') erstreckt, wobei diese Nabe auf einer vorderen Fläche einen äußeren axialen Kranz (91) in Drehverbindung mit der ersten Kupplung (89A), einen inneren axialen Kranz (93) in Drehverbindung mit der zweiten Kupplung (89B) umfasst, wobei diese Nabe drehbar um die erste Achse (X-X') auf einem Verteiler (87), der im Gehäuse (21) befestigt ist, montiert ist.

7. Übertragungselement nach einem der Ansprüche 1 bis 6, **dadurch gekennzeichnet, dass** das Eingangsglied (15) von einer Scheibe gebildet wird, die sich senkrecht zu der ersten Achse (X-X') erstreckt, wobei diese Scheibe auf einer vorderen Fläche einen vorderen axialen Kranz (37), der mit Auskehlungen (47) zur Verbindung mit einer dämpfenden Schwungscheibe (22, 23) versehen ist, die mit der Wärmekraftmaschine (11) verbunden ist, und auf einer hinteren Fläche einen hinteren axialen Kranz (39) in Drehverbindung mit der ersten Kupplung (89A) umfasst.

8. Übertragungselement nach einem der Ansprüche 1 bis 7, **dadurch gekennzeichnet, dass** das Ausgangsglied (19) von einer Scheibe gebildet wird, die sich senkrecht zu der ersten Achse (X-X') erstreckt, wobei diese Scheibe auf einer vorderen Fläche einen inneren axialen Kranz (63), der mit Auskehlungen (25) zur Verbindung mit einer Eingangswelle (13) des Getriebes versehen ist, und einen äußeren axialen Kranz (61) in Drehverbindung mit der zweiten Kupplung (89B) umfasst.

9. Übertragungselement nach einem der Ansprüche 1 bis 8, **dadurch gekennzeichnet, dass** das Eingangsglied (15), die erste und die zweite Kupplung (89A, 89B), das Zwischenglied (83) und das Ausgangsglied (19) Teil eines Moduls bilden, das in der Aufnahme (69) zusammenhängend angeordnet ist.

10. Übertragungselement nach einem der Ansprüche 1 bis 9, **dadurch gekennzeichnet, dass** die erste und die zweite Kupplung (89A, 89B) vom nasslaufenden Typ sind, wobei die Aufnahme (69) gegenüber einer Schmier- und Kühlflüssigkeit dicht abgeschlossen ist.

11. Übertragungselement nach Anspruch 10, **dadurch gekennzeichnet, dass** die erste Kupplung (89A) einen ersten Satz Scheiben (151A) in Drehverbindung mit dem Eingangsglied (15) und einen zweiten Satz Scheiben (153A) in Drehverbindung mit dem Zwischenglied (83) umfasst, wobei die Scheiben (153A) dieses zweiten Satzes zwischen den Scheiben (151A) des ersten Satzes angeordnet sind, wobei der erste und der zweite Satz Scheiben (151A, 153A) bei axialer Verschiebung unter der Wirkung eines Betätigungskolbens (155A), der in einer Aufnahme (99) des Zwischenglieds (83) angeordnet ist, verschiebbar sind.

12. Übertragungselement nach einem der Ansprüche 10 oder 11, **dadurch gekennzeichnet, dass** die zweite Kupplung (89B) einen ersten Satz Scheiben (153B) in Drehverbindung mit dem Zwischenglied (83) und einen zweiten Satz Scheiben (151B) in Drehverbindung mit dem Ausgangsglied (19) umfasst, wobei die Scheiben (151B) des zweiten Satzes zwischen den Scheiben (153B) des ersten Satzes angeordnet sind, wobei der erste und der zweite Scheibensatz (151B, 153B) bei axialer Verschiebung unter der Wirkung eines Betätigungskolbens (155B), der in einer Aufnahme (101) des Zwischenglieds (83) angeordnet ist, verschiebbar sind.

13. Übertragungselement nach einem der Ansprüche 10 bis 12, **dadurch gekennzeichnet, dass** die erste und die zweite Kupplung (89A, 89B) jeweils ein Rückstellglied (157A, 157B) in geöffneter Stellung dieser Kupplungen (89A, 89B) umfassen.

14. Übertragungselement nach einem der Ansprüche 10 bis 13, **dadurch gekennzeichnet, dass** es außerdem einen Hydraulikkreislauf (201, 203, 205) zur selektiven Steuerung des Schließens der ersten und der zweiten Kupplung (89A, 89B) umfasst.

15. Kraftfahrzeug, das einen parallelen Hybridantriebsstrang umfasst, wobei der Antriebsstrang eine Wärmekraftmaschine, ein Getriebe und ein Übertragungselement nach einem der Ansprüche 1 bis 14, das die Wärmekraftmaschine mit dem Getriebe verbindet, umfasst.
